# EUROPÄISCHE PATENTSCHRIFT

(11) **EP 3 304 750 B1**
(45) Veröffentlichungstag und Bekanntmachung des Hinweises auf die Patenterteilung: **27.06.2018**
(21) Anmeldenummer: 16706804.8
(22) Anmeldetag: 27.02.2016
(51) Int. Cl.: H04B 1/3877, H04L 29/08, H04B 1/00

(54) **ZWEITNUTZUNG EINER KRAFTFAHRZEUGANTENNE DURCH EIN E-CALL-STEUERGERÄT**
SHARED USE OF A MOTOR VEHICLE ANTENNA BY AN E-CALL CONTROLLER
UTILISATION SECONDAIRE D'UNE ANTENNE DE VÉHICULE AUTOMOBILE VIA UN MOYEN DE COMMANDE D'APPEL D'URGENCE

(30) Priorität: 03.06.2015 DE 102015007144
(43) Veröffentlichungstag der Anmeldung: 11.04.2018
(73) Patentinhaber: Audi AG, 85045 Ingolstadt (DE)
(72) Erfinder: PAPP, Aurel, 85123 Karlskron (DE); POHL, Andreas, 85095 Denkendorf (DE); SPEHL, Jürgen, 85139 Wettstetten (DE); REICHARDT, Lars, 85055 Ingolstadt (DE)
(74) Vertreter: Brandt, Kai
(86) Internationale Anmeldenummer: PCT/EP2016/000342
(87) Internationale Veröffentlichungsnummer: WO 2016/192822

(56) Entgegenhaltungen:
- WO-A1-2014/015933
- DE-A1-102007 058 985
- DE-A1-102010 028 871

## Beschreibung

Die Erfindung betrifft eine Schaltvorrichtung zum abwechselnden Verbinden eines Mobilfunkmoduls und eines E-Call-Steuergeräts mit einer gemeinsamen Antenne. Die Antenne kann hierdurch von dem Mobilfunkmodul genutzt werden und im Bedarfsfall mit dem E-Call-Steuergerät gekoppelt werden.

Mittels eines E-Call-Steuergeräts kann ein Notruf (Englisch: emergency-call oder kurz E-Call) abgesetzt werden. Das E-Call-Steuergerät löst diesen Notruf selbsttätig aus, falls das Kraftfahrzeug verunfallt. Das E-Call-Steuergerät kann z.B. durch ein Auslösesignal einer Crash-Sensorik aktiviert werden. Es können mittels des Notrufs z.B. Informationen über die aktuelle Position des Kraftfahrzeugs an eine Leitstelle übertragen werden. Des Weiteren kann eine Telefonverbindung zwischen der Leitstelle und der Fahrgastzelle des Kraftfahrzeugs bereitgestellt werden. Hierdurch kann eine im Kraftfahrzeug befindliche Person mit der Leitstelle kommunizieren, ohne selbst das Telefon bedienen zu müssen.

Zum Bereitstellen einer für den Notruf benötigten Mobilfunkverbindung zwischen Kraftfahrzeug und z.B. der Leitstelle ist eine Antenne nötig, über welche der Notruf in ein Telefonnetz abgesetzt werden kann. Da es sich bei einem E-Call um eine Sicherheitsapplikation handelt, ist man daran interessiert, eine möglichst robuste und störarme Mobilfunkverbindung zu ermöglichen. Eine Anforderung an die Antenne ist somit eine möglichst unfallsichere Positionierung bei bestmöglicher Performanz. Hierzu gibt es nur wenige Antennenpositionen, die dies so erfüllen. Eine mögliche Position, die eine gute Kompromisslösung zwischen Crash-Sicherheit bei möglichst optimaler Performanz gewährleistet, ist die Dachantenne. Diese ist aber auch für die Nutzung durch ein Mobilfunkmodul für Telefon- und Onlinedienste sehr vorteilhaft. Würde diese optimierte Position und Antenne exklusiv für ein E-Call-Steuergerät genutzt werden, so würde dies zwangsläufig eine Beeinträchtigung der anderen Dienste, das heißt Telefon- und Onlinedienste, bedeuten, da hier auf andere Antennen zurückgegriffen werden müsste. Ein Zusammenschalten mittels eines einfachen Kopplers oder Switches ist an dieser Stelle nicht ohne Weiteres möglich, da durch die unzureichende Entkopplung die Gefahr besteht, dass die Eingangsstufen der beiden Empfangsmodule (Mobilfunkmodul und E-Call-Steuergerät) sich gegenseitig beschädigen.

Aus der DE 10 2007 058 985 A1 ist ein Kraftfahrzeug bekannt, bei welchem eine Antenne über einen Schalter abwechselnd mit einem Mobilfunktelefon einerseits und einem Zugangskontrollsystem für einen schlüssellosen Zugang zu dem Kraftfahrzeug andererseits verschaltet wird. Falls das Zugangskontrollsystem die Antenne nutzt, wird das Mobilfunktelefon durch den Schalter elektrisch von der Antenne getrennt, sodass ein Koaxkabel, durch welches das Mobilfunktelefon und der Schalter verbunden sind, in einem Leerlauf endet. Bevor das Mobilfunktelefon von der Antenne getrennt wird, wird sichergestellt, dass sich keine Person im Kraftfahrzeug befindet, sodass ein Betrieb des Mobilfunktelefons unwahrscheinlich ist.

Durch den Leerlauf ergibt sich das Problem, dass aus Sicht des Mobilfunkmoduls die Verbindung zwischen Mobilfunkmodul und Antenne unterbrochen ist, wie es auch bei einem Defekt des Koaxialkabels vorliegen kann. Mit anderen Worten tritt aus Sicht des Mobilfunkmoduls durch das Abkoppeln des Koaxialkabels von der Antenne ein Verbindungsfehler auf.

Aus WO 2014/015933 ist eine Mobilfunkvorrichtung für einen Kraftwagen, die ein erstes Mobilfunkmodul und ein zweites Mobilfunkmodul aufweist. Aus der DE 10 2010 028 871 A1 ist eine Antenneneinrichtung für die Fahrzeugkommunikation bekannt. Bei der Antenneneinrichtung ist die E-Call-Einheit oder Notrufeinheit in das Mobilfunkmodul integriert, sodass sich hierdurch eine Koordination von Mobilfunkmodul und E-Call-Steuergerät erübrigt.

Aus der DE 10 2013 215 728 A1 ist ein Verfahren zur Auswahl eines Funkübertragungskanals in einem Funksystem bekannt. Jeder Funkübertragungskanal weist eine andere Übertragungstechnologie auf. Durch die Auswahl des Funkübertragungskanals wird die jeweilige Verbindungstechnologie und/oder Infrastruktur-Komponente hinsichtlich der jeweiligen Anwendung und somit der Qualität optimiert. Für eine Notruf-Funktion kann eine besonders hohe Priorität eingestellt werden, sodass der Notruf-Funktion stets die Übertragungstechnologie mit der höchsten Qualität zur Verfügung steht.

In der US 2005/0231439 A1 ist eine Antennenschalteinrichtung beschrieben, mittels welcher hochfrequente Signale über einen jeweiligen Signaleingang abwechselnd an eine Antenne geleitet werden können. Das jeweils andere Signal, das nicht zur Antenne geleitet wird, wird über einen Resonanzschaltkreis in ein Massepotenzial abgeleitet. Hierdurch wird verhindert, dass dieses blockierte Signal, das nicht zur Antenne weitergeleitet wird, das andere Signal stört.

Der Erfindung liegt die Aufgabe zugrunde, in einem Kraftfahrzeug einen störungsfreien Betrieb eines Mobilfunkmoduls und eines E-Call-Steuergeräts an einer gemeinsamen Antenne zu gewährleisten.

Die Aufgabe wird durch die Schaltvorrichtung gemäß Patentanspruch 1 gelöst. Vorteilhafte Weiterbildungen der Erfindung sind durch die Merkmale der abhängigen Patentansprüche gegeben.

Erfindungsgemäß ist eine Schaltvorrichtung bereitgestellt, die zum abwechselnden Verbinden des Mobilfunkmoduls und des E-Call-Steuergeräts mit der Antenne ausgelegt ist. Das Mobilfunkmodul kann beispielsweise Bestandteil eines Informations-Unterhaltungssystems (Infotainmentsystem) sein und zum Bereitstellen von Telefonverbindungen und/oder Onlinediensten im unfallfreien Betrieb des Kraftfahrzeugs vorgesehen sein. Das E-Call-Steuergerät kann in an sich bekannter Weise ausgestaltet sein und dazu ausgelegt sein, im Falle eines Unfalls oder Crashs des Kraftfahrzeugs selbsttätig einen Notruf abzusetzen und/oder eine Sprechverbindung zwischen einer Fahrgastzelle des Kraftfahrzeugs und einer Notrufzentrale oder Leitstelle herzustellen.

Über die erfindungsgemäße Schaltvorrichtung werden sowohl das Mobilfunkmodul als auch das E-Call-Steuergerät mit der Antenne verschaltet. Hierzu weist die Schaltvorrichtung einen ersten Signaleingang zum Empfangen eines Sendesignals des Mobilfunkmoduls und einen zweiten Signaleingang zum Empfangen eines Sendesignals des E-Call-Steuergeräts auf. Ein Antennenanschluss ist zum Anschließen der Antenne bereitgestellt. Die Schaltvorrichtung weist eine Umschalteinrichtung auf, die dazu ausgelegt ist, in Abhängigkeit von einem Schaltsignal oder in Abhängigkeit von mehreren unterschiedlichen Schaltsignalen jeweils zwischen einem ersten und einem zweiten Schaltzustand zu wechseln. Mehrere Schaltsignale kommen beispielsweise dadurch zustande, dass der Wechsel zwischen den Schaltzuständen in Abhängigkeit von unterschiedlichen Schaltsignalen durchgeführt wird, wobei beispielsweise ein Schaltsignal durch das Mobilfunkmodul und ein anderes Schaltsignal durch das E-Call-Steuergerät erzeugt werden können. Weitere mögliche Schaltsignale sind im Zusammenhang mit den Weiterbildungen der Erfindung beschrieben.

Im ersten Schaltzustand ist der erste Signaleingang (Mobilfunkmodul) mit dem Antennenanschluss und im zweiten Schaltzustand der zweite Signaleingang (E-Call-Steuergerät) mit dem Antennenanschluss elektrisch verbunden. Durch die Umschalteinrichtung ist also jeweils nur einer der Signaleingänge mit dem Antennenanschluss elektrisch verbunden. Der jeweils andere Schalteingang ist in den beiden Schaltzuständen vom Antennenanschluss elektrisch entkoppelt. Mit anderen Worten ist eine gezielte Signalübertragung vom entkoppelten Schalteingang hin zum Antennenanschluss nicht vorgesehen. Angeschlossene Sendegeräte sollen aber die Abkopplung vom Antennenanschluss nicht als Fehler diagnostizieren.

Während eines Fahrbetriebs des Kraftfahrzeugs ist davon auszugehen, dass der erste Schaltzustand eingestellt ist, in welchem das Mobilfunkmodul über den ersten Signaleingang mit der Antenne gekoppelt ist. Im ersten Schaltzustand durch muss somit durch das E-Call-Steuergerät überprüft werden können, ob im Notfall bei einem Crash die Antenne durch das E-Call-Steuergerät erreichbar ist. Es mit also zwischen dem ersten Schaltzustand und z.B. einem abgerissenen Kabel unterschieden werden können. Hierzu ist erfindungsgemäß bei der Schaltvorrichtung vorgesehen, dass zumindest in dem zweiten Schaltzustand oder aber in beiden Schaltzuständen jeweils durch die Umschalteinrichtung derjenige Signaleingang, welcher vom Antennenanschluss entkoppelt ist, mit einer Abschlusseinrichtung elektrisch verbunden ist. Diese Abschlusseinrichtung ist dazu ausgelegt, an dem mit ihr verbundenen Signaleingang eine Antenne elektrisch zu emulieren. Mit anderen Worten verhält sich der Signaleingang aufgrund der mit ihm elektrisch verbundenen Abschlusseinrichtung elektrisch wie eine Antenne. Die Abschlusseinrichtung kann hierzu beispielsweise als eine Schaltung mit einem Schwingkreis oder mit einer Antennenimpedanz ausgestaltet sein, sodass sich die Abschlusseinrichtung bezüglich des Signaleingangs elektrisch verhält wie eine mit dem Signaleingang elektrisch verbundene Antenne. Insbesondere weist die Abschlusseinrichtung bezüglich einer Signalmasseleitung eine Impedanz auf, die einen Betrag aufweist, der kleiner als 1000 Ohm ist. Die Abschlusseinrichtung kann als Abschlusswiderstand ausgestaltet sein.

Durch die Erfindung ergibt sich der Vorteil, dass das E-Call-Steuergerät dahingehend diagnosefähig bleibt, dass es die elektrische Verbindung zwischen E-Call-Steuergerät und dem zweiten Signaleingang elektrisch dahingehend überwachen kann, dass ein Kabelabriss oder eine Kontaktkorrosion diagnostiziert oder detektiert oder erkannt werden kann. Insbesondere kann ein solcher Fehlerfall von dem vorgesehenen oder bestimmungsgemäßen ersten Schaltzustand unterschieden werden, in welchem der zweite Signaleingang von dem Antennenanschluss elektrisch entkoppelt ist. Dies ist ein ungefährlicher oder unkritischer Zustand, da das E-Call-Steuergerät jederzeit mittels eines Schaltsignals mit dem Antennenanschluss elektrisch verbunden werden kann (zweiter Schaltzustand).

Die erfindungsgemäße Schaltvorrichtung kann als separates Verbindungsmodul bereitgestellt sein, über welches das Mobilfunkmodul, das E-Call-Steuergerät und die Antenne verschaltet werden können. Die Schaltvorrichtung kann auch beispielsweise zusammen mit der Antenne als ein Antennenmodul bereitgestellt werden. Die Schaltvorrichtung kann auch beispielsweise in das E-Call-Steuergerät integriert sein.

Im Zusammenhang mit der Erfindung kann eine der genannten elektrischen Verbindungen eine galvanische oder kapazitive oder induktive Kopplung des jeweiligen Signaleingangs mit dem Antennenanschluss beziehungsweise der Abschlusseinrichtung darstellen. Die Wahl kann hier durch den Fachmann in Abhängigkeit von der verwendeten Signalübertragungstechnologie getroffen werden.

Gemäß der Erfindung ist eine Puffereinrichtung bereitgestellt und dazu ausgelegt, nach dem Wechseln in den zweiten Schaltzustand (E-Call-Steuergerät mit der Antenne verbunden) diesen zweiten Schaltzustand für eine vorbestimmte Mindestzeitdauer zu halten. Die Mindestzeitdauer kann beispielsweise in einem Bereich zwischen 30 Minuten und 120 Minuten liegen. Es kann auch vorgesehen sein, dass der zweite Schaltzustand dauerhaft oder permanent gehalten wird. Die Puffereinrichtung kann beispielsweise durch ein Schaltsignal, welches den Wechsel in den zweiten Schaltzustand auslöst, aktiviert werden und dann selbsttätig den zweiten Schaltzustand aufrecht erhalten. Die Puffereinrichtung kann hierzu beispielsweise als ein Programmmodul eines Mikrocontrollers oder Mikroprozessors der Schaltvorrichtung oder als eine integrierte Schaltung oder als eine Schaltung aus diskreten Bauelementen realisiert sein. Durch die Puffereinrichtung ergibt sich in vorteilhafter Weise die Möglichkeit, dass eine Telefonverbindung, die durch das E-Call-Steuergerät selbsttätig aufgebaut wird, aufrecht erhalten wird und hierdurch von außerhalb des Kraftfahrzeugs eine Rückfragemöglichkeit über die Telefonverbindung sichergestellt ist. So kann beispielsweise von einem Personal einer Leitstelle über die Telefonverbindung eine Person im Kraftfahrzeug angesprochen und/oder befragt werden.

Zu der Erfindung gehören auch optionale Weiterbildungen, durch deren Merkmale sich zusätzliche Vorteile ergeben.

Gemäß einer Weiterbildung der Erfindung ist bei der Schaltvorrichtung eine Schutzschaltung bereitgestellt, welche dazu ausgelegt ist, eine Sendeleistung desjenigen Signals zu absorbieren, das über den vom Antennenanschluss entkoppelten Signaleingang empfangen wird. Die Schutzschaltung kann hierzu die zu absorbierende Leistung beispielsweise in thermische Energie umwandeln. Die Sendeleistung wird also kompensiert oder abgeführt, sodass ein Übersprechen oder Einkoppeln der Sendeleistung in den Antennenanschluss oder den anderen Signaleingang vermieden oder zumindest reduziert ist. Insbesondere ist vorgesehen, dass die Schutzschaltung von der gesamten Sendeleistung des Sendesignals mehr als 50 Prozent, insbesondere mehr als 70 Prozent, bevorzugt mehr als 85 Prozent, insbesondere bevorzugt mehr als 90 Prozent, absorbiert, das heißt insbesondere in thermische Energie umwandelt. Hierdurch verursacht ein unplanmäßiges Senden des Sendesignals über den entkoppelten Signaleingang keinen Schaden an der Antenne oder dem anderen Signaleingang.

Gemäß einer Weiterbildung der Erfindung ist die Umschalteinrichtung dazu ausgelegt, bei gestörter Übertragung des zumindest einen Schaltsignals selbsttätig in den zweiten Schaltzustand zu schalten. Der zweite Schaltzustand ist also ein Default-Schaltzustand. Hierzu ist vorgesehen, dass die Umschalteinrichtung dazu ausgelegt ist, für den Fall, dass das zumindest eine Schaltsignal ein vorbestimmtes Störkriterium erfüllt, unabhängig von dem zumindest einen Schaltsignal in den zweiten Schaltzustand zu schalten. Das Störkriterium kann beispielsweise besagen, dass das Schaltsignal einen Signalpegel aufweist, der für einen fehlerfreien Betrieb nicht vorgesehen ist. Beispielsweise kann bei einer zerstörten Übertragungsleitung nach einem Crash z.B. durch einen Kabelriss eine Übertragung eines Schaltsignals unterbrochen oder blockiert sein. Dies kann dann anhand eines entsprechenden Störkriteriums selbsttätig durch die Schaltvorrichtung erkannt werden. In diesem Fall kann dann gemäß der Weiterbildung selbsttätig der zweite Schaltzustand durch die Schaltvorrichtung eingestellt werden. Durch die Weiterbildung ergibt sich der Vorteil, dass nach einem Crash auch bei zerstörten Signalleitungen dennoch das E-Call-Steuergerät durch die Schaltvorrichtung mit der Antenne elektrisch gekoppelt oder verbunden wird.

Gemäß einer Weiterbildung der Erfindung ist die Umschalteinrichtung dazu ausgelegt, in Abhängigkeit von einem Auslösesignal eines Crash-Sensors in den zweiten Schaltzustand zu wechseln. Der Crash-Sensor kann beispielsweise in dem Kraftfahrzeug auch zum Auslösen eines Airbags vorgesehen sein. Indem das Auslösesignal eines Crash-Sensors zum Schalten in den zweiten Schaltzustand verwendet wird, steht nach dem Crash in vorteilhafter Weise eine elektrische Verbindung zwischen dem E-Call-Steuergerät und der Antenne zur Verfügung. Damit kann verzögerungsfrei der Notruf abgesetzt werden. Zudem erfolgt das Wechseln in den zweiten Schaltzustand während des Crashs, sodass bei einer Zerstörung einer Signalleitung durch den Crash danach keine Signalübertragung eines Schaltsignals mehr notwendig ist, um in den zweiten Schaltzustand zu wechseln.

Um das Auslösesignal von einem Crash-Sensor zu empfangen, kann die Schaltvorrichtung einen dritten Signaleingang oder Steuereingang aufweisen, der von dem ersten und dem zweiten Signaleingang verschieden ist. Zusätzlich oder alternativ dazu ist vorgesehen, dass die Umschalteinrichtung dazu ausgelegt ist, zumindest ein Schaltsignal über den zweiten Signaleingang zu empfangen. Mit anderen Worten wird zumindest ein Schaltsignal implizit über dieselben elektrischen Leitungen übertragen, welche auch zum Übertragen des Sendesignals des E-Call-Steuergeräts bereitgestellt sind. Diese Verschaltung ist besonders aufwandsarm.

Hierbei kann vorgesehen sein, dass die Umschalteinrichtung dazu ausgelegt ist, eine vorbestimmte Steuersequenz als Schaltsignal über den zweiten Schalteingang zu empfangen. Mit anderen Worten unterscheidet sich das Sendesignal des E-Call-Steuergeräts, mit welchem die Telefonverbindung oder der Notruf signalisiert werden, von der Steuersequenz zum Wechseln zwischen den Schaltzuständen. Insbesondere ist eine Steuersequenz vorgesehen, durch welche die Umschalteinrichtung in den zweiten Schaltzustand schaltet. Durch Vorsehen einer Steuersequenz ergibt sich der Vorteil, dass ein Störsignal oder Zufallssignal von der vorbestimmten Steuersequenz unterschieden werden kann. Hierdurch ist ein Fehlalarm oder eine fehlerhafte Umschaltung zwischen den Schaltzuständen vermieden.

Gemäß einer Weiterbildung der Erfindung ist die Umschalteinrichtung dazu ausgelegt, in den zweiten Schaltzustand zu schalten, falls eine über den zweiten Signaleingang empfangene Signalleistung größer als ein vorbestimmter Schwellenwert ist. Mit anderen Worten ergibt sich ein Schaltsignal dadurch, dass eine Signalleistung am zweiten Signaleingang den Schwellenwert überschreitet. Hierdurch ergibt sich der Vorteil, dass das E-Call-Steuergerät einfach mit dem Aussenden des Sendesignals beginnen muss, um den Notruf abzusetzen und/oder eine Telefonverbindung aufzubauen. Die Schalteinrichtung erkennt dann den Anstieg der Signalleistung am zweiten Signaleingang und schaltet daraufhin in den zweiten Schaltzustand, sodass der zweite Signaleingang mit dem Antennenanschluss elektrisch verbunden ist. Zusätzlich oder alternativ zur Auswertung der Signalleistung kann detektiert werden, dass eine Amplitude des Sendesignals größer als ein vorbestimmter Schwellenwert ist und in diesem Fall in den zweiten Schaltzustand gewechselt werden.

Für den Fall, dass das Einschaltsignal über einen dritten Signaleingang oder als Steuersequenz über den zweiten Signaleingang empfangen wird, ergeben sich weitere vorteilhafte Ausgestaltungen der Erfindung in Abhängigkeit davon, wie die Schaltsignale ausgestaltet sind. Gemäß einer Weiterbildung ist zumindest ein Schaltsignal als eine modulierte Impulsfolge ausgestaltet, wobei die Umschalteinrichtung diese modulierte Impulsfolge erkennt. Die Modulation kann als Frequenzmodulation und/oder Phasenmodulation vorgesehen sein. Eine modulierte Impulsfolge lässt sich besonders zuverlässig von einem Rauschen oder Störsignal unterscheiden. Zusätzlich oder alternativ dazu kann in den zweiten Schaltzustand gewechselt werden, falls eine Amplitude des Sendesignals größer als ein vorbestimmter Schwellenwert ist. Gemäß einer anderen Weiterbildung wird zumindest ein Schaltsignal als analoges Signal empfangen und in Abhängigkeit von einer Schwellenwertdetektion zwischen den Schaltzuständen umgeschaltet. Die Schwellenwertdetektion kann eine binäre Entscheidungsschwelle (zweiwertige Entscheidung) oder mehrstufige Entscheidungsschwelle (mehr als zwei Entscheidungszustände) vorsehen. Mittels einer Schwellenwertdetektion für ein analoges Signal ergibt sich der Vorteil, dass auch ein kontinuierliches Signal, beispielsweise ein Sensorsignal oder Zustandssignal, als Schaltsignal genutzt werden kann. Eine mehrstufige Entscheidungsschwelle weist den Vorteil auf, dass zwischen einem Schaltsignal für den ersten Schaltzustand und einem Schaltsignal für den zweiten Schaltzustand sowie einem Fehlersignal unterschieden werden kann. Hierdurch kann beispielsweise das beschriebene Störkriterium definiert sein. Eine Weiterbildung sieht vor, dass zumindest ein Schaltsignal ein pulsweitenmoduliertes Signal oder eine Sequenz vorbestimmter Periodizität darstellt, die jeweils durch die Umschalteinrichtung erkannt werden. Als Sequenz kann beispielsweise eine rechteckförmige oder rampenförmige Sequenz vorgesehen sein. Das Senden von pulsweitenmodulierten Signalen oder Sequenzen mit vorbestimmter Periodizität weist den Vorteil auf, dass eine durchgehende oder permanente oder dauerhafte Überwachung des Schaltsignals möglich ist. Mit anderen Worten wird der durch das Schaltsignal vorgegebene Schaltzustand gehalten, solange das entsprechende pulsweitenmodulierte Signal oder die Sequenz empfangen und erkannt wird. Andernfalls kann beispielsweise auf einen vorbestimmten Schaltzustand, insbesondere den zweiten Schaltzustand, als Rückfalllösung umgestellt werden. Hierdurch ergibt sich der Vorteil, dass unmittelbar bei einer Unterbrechung des pulsweitenmodulierten Signals oder der Sequenz der Fehler oder Defekt erkannt wird. Gemäß einer Weiterbildung wird als zumindest ein Schaltsignal ein digital moduliertes Signal erkannt. Hierdurch ergibt sich der Vorteil, dass ein digital codierte Betriebszustand oder Schaltbefehl unmittelbar über die Modulation in ein Signal umgewandelt wird, welches als Schaltsignal von der Umschalteinrichtung ausgewertet wird. Insbesondere können umfangreiche Informationen digital codiert übertragen werden. Beispielsweise kann der einzustellende Schaltzustand ausgewählt werden. Es kann auch beispielsweise eine vorgegebene Zeitdauer übertragen werden, für welche einer der Schaltzustände eingestellt werden soll, um danach wieder den ursprünglichen Schaltzustand durch die Umschalteinrichtung einzustellen.

Um eine geeignete Umschalteinrichtung bereitzustellen, sieht eine Weiterbildung der Erfindung vor, dass zum Einstellen der beiden Schaltzustände ein HF-Relais (HF - Hochfrequenz) oder ein Halbleiterschalter vorgesehen sind. Mit einem HF-Relais oder einem Halbleiterschalter lässt sich jeweils eine elektrische Verbindung zwischen einem Signaleingang und dem Antennenanschluss herstellen und dabei zuverlässig der jeweils andere Signaleingang elektrisch entkoppeln. Mit anderen Worten wird hierdurch das Übersprechen zwischen den Signaleingängen gedämpft oder unterdrückt.

Durch die erfindungsgemäße Schaltvorrichtung kann ein Kraftfahrzeug bereitgestellt werden, durch welches sich ebenfalls die erfindungsgemäßen Vorteile realisieren lassen. Bei dem Kraftfahrzeug sind ein Mobilfunkmodul und ein E-Call-Steuergerät über eine gemeinsame Schaltvorrichtung mit einer Antenne des Kraftfahrzeugs verschaltet. Die Schaltvorrichtung stellt dabei eine Ausführungsform der erfindungsgemäßen Schaltvorrichtung dar. Das Mobilfunkmodul kann durch ein Infotainmentsystem des Kraftfahrzeugs bereitgestellt sein. Das E-Call-Steuergerät kann in an sich bekannter Weise ausgestaltet sein. Das E-Call-Steuergerät kann zusätzlich mit einer zweiten Antenne oder Backup-Antenne verschaltet sein. Das Kraftfahrzeug ist bevorzugt als Kraftwagen, insbesondere als Personenkraftwagen, ausgestaltet.

Im Folgenden ist ein Ausführungsbeispiel der Erfindung beschrieben. Hierzu zeigt:
- Fig. 1: eine schematische Darstellung eines Kraftfahrzeugs mit einer Ausführungsform der erfindungsgemäßen Schaltvorrichtung, die in einen ersten Schaltzustand geschaltet ist, und
- Fig. 2: eine schematische Darstellung des Kraftfahrzeugs von Fig. 1, wobei die Schaltvorrichtung in einen zweiten Schaltzustand geschaltet ist.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

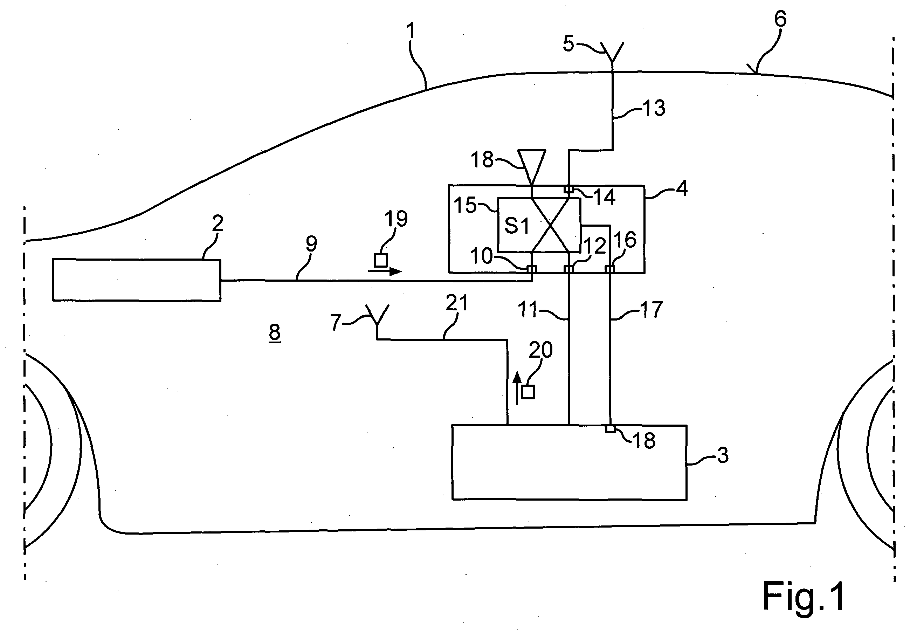

Fig. 1 zeigt ein Kraftfahrzeug 1, bei dem es sich beispielsweise um einen Kraftwagen, insbesondere einen Personenkraftwagen, handeln kann. Dargestellt sind ein Mobilfunkmodul 2, ein E-Call-Steuergerät 3, eine Schaltvorrichtung 4, eine Antenne 5, die auf einem Fahrzeugdach 6 des Kraftfahrzeugs 1 angeordnet sein kann, und eine Antenne 7, die beispielsweise in einem Fahrzeuginnenraum 8 des Kraftfahrzeugs 1 angeordnet sein kann. Die Antenne 7 kann beispielsweise in ein Armaturenbrett des Kraftfahrzeugs 1 integriert sein. Das Mobilfunkmodul 2 kann beispielsweise durch ein Infotainmentsystem bereitgestellt sein. Das Mobilfunkmodul 2 kann ein Mobiltelefon sein, das durch einen (nicht dargestellten) Benutzer des Kraftfahrzeugs 1 zum Telefonieren verwendet werden kann. Das Mobilfunkmodul 2 kann auch als Modem für eine Internetverbindung ausgestaltet oder vorgesehen sein. Das Mobilfunkmodul 2 kann beispielsweise ein GSM-Modul (GSM - global system for mobile telecommunications), ein UMTS-Modul (UMTS - universal mobile telecommunications system) oder ein LTE-Modul (LTE - long term evolution) umfassen. Das Mobilfunkmodul 2 kann auch eine WLAN-Technologie (WLAN - wireless local area network) umfassen.

Das Mobilfunkmodul 2 kann über eine erste elektrische Signalleitung 9 mit einem ersten Signaleingang 10 der Schaltvorrichtung 4 verbunden sein. Das E-Call-Steuergerät 3 kann über eine zweite Signalleitung 11 mit einem zweiten Signaleingang 12 der Schaltvorrichtung 4 verbunden sein. Über die Schaltvorrichtung 4 sind das Mobilfunkmodul 2 und das E-Call-Steuergerät 3 mit der Antenne 5 verschaltet. Die Antenne 5 ist über eine Antennenleitung 13 mit einem Antennenanschluss 14 verbunden. Die Signalleitungen 9, 11 und/oder die Antennenleitung 13 können jeweils beispielsweise eine Koaxialleitung sein.

Von dem Mobilfunkmodul 2 und dem E-Call-Steuergerät 3 ist jeweils nur eines der Geräte mit der Antenne 5 zurzeit verbunden. Hierzu ist eine Umschalteinrichtung 15 in der Schaltvorrichtung 4 vorgesehen, welche abwechselnd den ersten Signaleingang 10 und den zweiten Signaleingang 12 mit dem Antennenanschluss 14 elektrisch verbunden oder koppelt. Die Umschalteinrichtung 15 kann beispielsweise auf der Grundlage eines HF-Relais oder Halbleiterschalters realisiert sein. Zum Umschalten der Umschalteinrichtung 15 kann ein Steuereingang 16 vorgesehen sein, über welchen die Umschalteinrichtung 15 ein Schaltsignal empfangen kann. In Abhängigkeit von dem Schaltsignal wird einer von zwei Schaltzuständen S1, S2 der Umschalteinrichtung 15 eingestellt. Der Steuereingang 16 kann über eine Steuerleitung 17 mit einem Steuerausgang 18 des E-Call-Steuergeräts 3 verbunden sein. Hierdurch kann das E-Call-Steuergerät 3 das Umschalten der Umschalteinrichtung 15 steuern oder auslösen oder bewirken.

In Fig. 1 ist der erste Schaltzustand S1 der Umschalteinrichtung 15 dargestellt, in welchem der erste Signaleingang 10 mit dem Antennenanschluss 14 elektrisch verbunden ist. Der zweite Signaleingang 12 ist von dem Antennenanschluss 14 entkoppelt. Stattdessen ist der zweite Signaleingang 12 durch die Umschalteinrichtung 15 mit einer Abschlusseinrichtung 18 verbunden oder gekoppelt. Die Abschlusseinrichtung 18 weist ein elektrisches Verhalten oder eine Impedanz auf, wie sie auch eine Antenne, beispielsweise die Antenne 5, aufweisen kann. Insbesondere stellt die Abschlusseinrichtung 18 keinen Leerlauf dar. Mit anderen Worten stellt die Abschlusseinrichtung 18 eine Impedanz kleiner als Unendlich oder eine Masseverbindung dar.

Das E-Call-Steuergerät 3 kann während eines Betriebs des Kraftfahrzeugs eine Diagnose dahingehend durchführen, dass überprüft wird, ob die Signalleitung 11 mit dem zweiten Signaleingang 12 elektrisch verbunden ist. Beispielsweise kann ein Leitungswiderstand ermittelt werden. Dies ist möglich, weil durch die Abschlusseinrichtung 18 eine Abschlussimpedanz gebildet ist, durch welche vom E-Call-Steuergerät 3 aus zwischen einer defekten Signalleitung 11, das heißt einer vom zweiten Signaleingang 12 losgelösten Signalleitung 11 (Leerlauf) einerseits und einer bestimmungsgemäß mit dem zweiten Signaleingang verschalteten Signalleitung 11 unterschieden werden kann. Die Abschlusseinrichtung 18 kann beispielsweise eine Schaltung mit einem Schwingkreis und/oder einem Ohmschen Widerstand umfassen. Indem durch die Abschlusseinrichtung 18 eine Antenne emuliert wird, muss dabei durch das E-Call-Steuergerät 3 kein Unterschied zwischen dem ersten und dem zweiten Schaltzustand der Umschalteinrichtung gemacht werden. Mit anderen Worten ist keine Anpassung des E-Call-Steuergeräts 3 an die Umschalteinrichtung 15 nötig.

In dem ersten Schaltzustand S1 kann das Mobilfunkmodul 2 ein Sendesignal 19 aussenden, das über die Schaltvorrichtung 4 zwischen dem ersten Signaleingang 10 und dem Antennenanschluss 14 übertragen und in die Antennenleitung 13 hin zur Antenne 5 ausgesendet wird. Währenddessen kann durch das E-Call-Steuergerät 3 auf der Grundlage der Abschlusseinrichtung 18 die elektrische Verbindung zwischen dem E-Call-Steuergerät 3 und dem zweiten Signaleingang 12, das heißt die bestimmungsgemäße elektrische Anbindung der Signalleitung 11, detektiert oder erkannt oder überwacht werden. Das E-Call-Steuergerät 3 kann über die zweite Antenne 7 ebenfalls ein Sendesignal 20 aussenden. Hierzu kann die zweite Antenne 7 über ein zweites Antennenkabel 21 mit dem E-Call-Steuergerät 3 verschaltet sein.

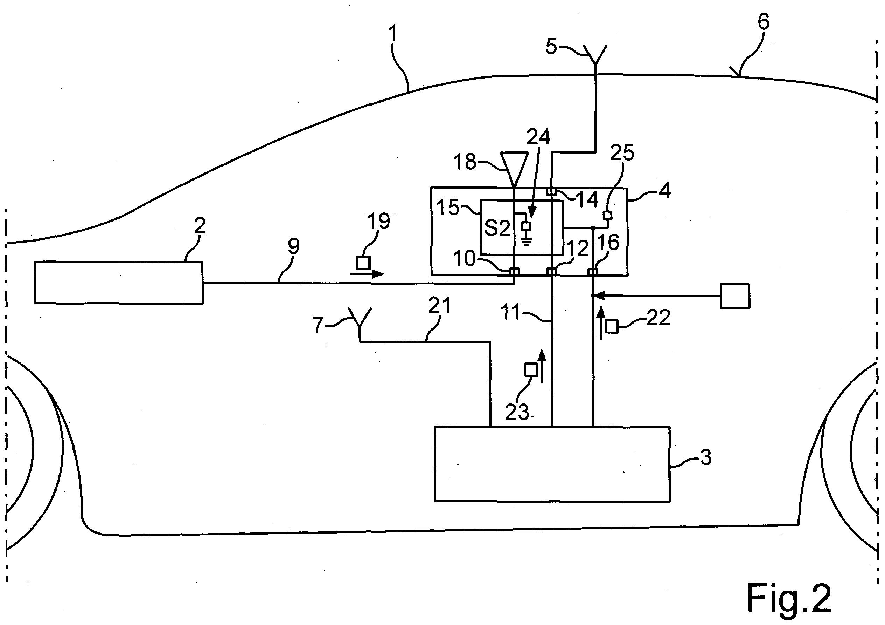

Fig. 2 stellt eine Situation dar, bei welcher die Umschalteinrichtung 15 in den zweiten Schaltzustand S2 geschaltet ist. Beispielsweise kann das E-Call-Steuergerät 3 ein Schaltsignal 22 am Steuereingang 16 erzeugt haben. In Abhängigkeit von dem Schaltsignal 22 hat die Umschalteinrichtung 15 vom ersten Schaltzustand S1 in den zweiten Schaltzustand S2 umgeschaltet. Das Schaltsignal 22 kann beispielsweise eine Pegeländerung sein. Mit anderen Worten wird bei einer Signalamplitude kleiner als ein vorbestimmter Schwellenwert auf der Steuerleitung 17 der erste Schaltzustand S1 eingestellt. Bei einem Signalpegel oberhalb des Schwellenwerts ergibt sich das Schaltsignal 22, das heißt die Umschalteinrichtung 15 wechselt in den Schaltzustand S2.

Im Schaltzustand S2 ist der erste Signaleingang 10 mit der Abschlusseinrichtung 18 und der zweite Signaleingang 12 mit dem Antennenanschluss 14 verbunden. Das E-Call-Steuergerät 3 kann das Schaltsignal 22 beispielsweise aufgrund eines Crashs des Kraftfahrzeugs 1 erzeugt haben. Das E-Call-Steuergerät 3 versucht daher, ein Sendesignal 23 auszusenden. Das Sendesignal 23 kann beispielsweise ein Notrufsignal sein und/oder ein Signal zum Aufbauen oder Erzeugen einer Mobilfunkverbindung, um eine Sprechverbindung zwischen dem Fahrzeuginnenraum 8 und einer fahrzeugexternen Leitstelle bereitzustellen.

Das E-Call-Steuergerät 3 versucht dabei zunächst, diejenige Antenne mit der besseren Abstrahlcharakteristik zu verwenden. Dies ist bei den beiden Antennen 5, 7 die Antenne 5. Daher wird mittels des Schaltsignals 22 durch das E-Call-Steuergerät 3 der zweite Schaltzustand S2 bei der Umschalteinrichtung 15 herbeigeführt. Nun kann das E-Call-Steuergerät 3 das Sendesignal 23 über die Sendeleitung 11 an den zweiten Signaleingang 12 aussenden. Der zweite Signaleingang 12 ist mit dem Antennenanschluss 14 verbunden, sodass das Sendesignal 23 zur Antenne 5 übertragen wird.

Währenddessen kann es sein, dass das Mobilfunkmodul 2 weiterhin das Sendesignal 19 aussendet, weil während des Crashs bereits eine Telefonverbindung über das Mobilfunkmodul 2 bereitgestellt war. Um die Leistung des Sendesignals 19 zu absorbieren oder zu kompensieren, kann die Schaltvorrichtung 4 eine Schutzschaltung 24 aufweisen. Durch die Schutzschaltung 24 wird der größte Teil der Sendeleistung des Sendesignals 19 in thermische Energie gewandelt. Hierdurch ist verhindert, dass es zu einem Übersprechen des Sendesignals 19 hin zur Antenne 5 oder zum E-Call-Steuergerät 3 kommt. Des Weiteren können die beiden Signaleingänge 10, 12 durch weitere Maßnahmen voneinander entkoppelt sein.

Die Schaltvorrichtung 4 kann des Weiteren eine Puffereinrichtung 25 aufweisen, die beispielsweise durch einen Mikrocontroller oder eine integrierte Schaltung oder einen Schaltkreis bereitgestellt sein kann. Durch die Puffereinrichtung 25 kann der zweite Schaltzustand S2 für eine vorbestimmte Mindestzeitdauer aufrecht erhalten werden. Anstelle einer Puffereinrichtung 25 kann auch vorgesehen sein, dass der zweite Schaltzustand S2 mittels des Schaltsignals 22 durch das E-Call-Steuergerät 3 für die Mindestzeitdauer aufrecht erhalten bleibt.

Der Steuereingang 16 kann auch mit einem Crash-Sensor 26 gekoppelt sein. Die Umschalteinrichtung 15 kann dann in Abhängigkeit von eine Auslösesignal 27 des Crash-Sensors 26 in den zweiten Schaltzustand S2 schalten. Der Crash-Sensor 26 kann z.B. zum Auslösen einer (nicht dargestellten) Airbageinheit bereitgestellt sein.

Durch die Schaltvorrichtung 4 ist somit ein Modul bereitgestellt, welches es ermöglicht, das E-Call-Signal im Crashfall auf eine bestimmte Antenne, zum Beispiel die Dachantenne, zu führen oder leiten. Solange kein Unfall vorliegt, kann diese Antenne von mindestens einem anderen Dienst oder Mobilfunkmodul, zum Beispiel einem Telefon- oder einem Onlinedienst, genutzt werden. Das Besondere an dem bereitgestellten Modul ist, dass die Schaltung in diesem Modul eine möglichst gute Trennung/Entkopplung der beiden Systeme (Mobilfunkmodul 2 und E-Call-Steuergerät 3) gewährleistet. Das E-Call-Steuergerät 3 kann des Weiteren vorsehen, dass für den Fall, dass ein E-Call nicht über die bevorzugte Antenne 5 erfolgreich gesendet werden kann, auf eine zweite Antenne 7 automatisch umgeschaltet wird.

Durch die Schaltvorrichtung kann ein Schaltsignal von dem E-Call-Steuergerät empfangen werden. Wenn dieses Schaltsignal ausgegeben wird, dann schaltet die Schaltvorrichtung das E-Call-Steuergerät auf die ausgewählte Antenne, beispielsweise das Dach-Antennenmodul, um. Über die Schaltvorrichtung ist sichergestellt, dass jeweils nur ein Dienst an der jeweiligen Antenne anliegt und damit nicht die Gefahr der Verkopplung unter den Diensten entsteht oder eine Beschädigung der Eingangsmodule oder Empfangsmodule auftreten kann, indem diese mit einer Sendeleistung des jeweils anderen Sendemoduls beaufschlagt werden. Dennoch ist eine Diagnosemöglichkeit für jeden Dienst vorgesehen.

Indem die Diagnosefähigkeit mittels der Abschlusseinrichtung 18 bereitgestellt ist, kann unabhängig vom Schaltzustand der Umschalteinrichtung 15 durch die jeweiligen Steuergeräte (E-Call-Steuergerät 3 und Mobilfunkmodul 2) die korrekte elektrische Anbindung an die Schaltvorrichtung 4 überprüft werden. Somit wird verhindert, dass Fehlereinträge in einem Fehlerspeicher des Kraftfahrzeugs generiert werden. Des Weiteren kann beim Schalten eines E-Calls dieser für beispielsweise mindestens 60 Minuten autark aufrecht erhalten werden. Durch die HF-Schutzschaltung 24 werden nach dem E-Call-Umschaltimpuls, das heißt dem Schaltsignal 22, andere Steuergeräte kompensiert, das heißt es wird dafür Sorge getragen, dass die weiterhin von anderen Steuergeräten abgestrahlte HF-Energie nicht durch fehlende Anpassung oder die fehlende Antenne zur Schädigung am Sendemodul des E-Call-Steuergeräts 3 oder dem HF-Frontend, das heißt der Schaltvorrichtung 4 und/oder der Antenne 5, führen. Des Weiteren kann mit der Schutzschaltung ein Übersprechen zwischen den zwei Signaleingängen der Schaltvorrichtung 4 verhindert werden.

Die technische Realisierung des Schaltimpulses des Schaltsignals 22 kann beispielsweise sein: frequenz- beziehungsweise phasenmodulierte Impulsfolgen, rechteck- beziehungsweise rampenförmige Sequenzen, bestimmte Periodizität, einfache binäre oder mehrstufige Entscheidungsschwellen, bis hin zu digital modulierten Bitfolgen.

Mit Hilfe der Schaltvorrichtung lässt sich die Anzahl der benötigten Antennen im Kraftfahrzeug reduzieren. Des Weiteren lassen sich die hohen sicherheitsrelevanten Anforderungen eines E-Call-Steuergeräts erfüllen und negative Auswirkungen (schlechtere Antennenperformanz) für Infotainmentdienste vermeiden.

Insgesamt zeigt das Beispiel, wie durch die Erfindung ein E-Call-gesteuertes Schaltungsmodul bereitgestellt werden kann.

## Patentansprüche

1. Schaltvorrichtung (4) zum abwechselnden Verbinden eines Mobilfunkmoduls (2) und eines E-Call-Steuergeräts (3) mit einer Antenne (5), aufweisend:
- einen ersten Signaleingang (10) zum Empfangen eines Sendesignals (19) des Mobilfunkmoduls (2);
- einen zweiten Signaleingang (12) zum Empfangen eines Sendesignals (23) des E-Call-Steuergeräts (3);
- einen Antennenanschluss (14) zum Anschließen der Antenne (5);
- eine Umschalteinrichtung (15), die dazu ausgelegt ist, in Abhängigkeit von zumindest einem Schaltsignal (22) zwischen einem ersten Schaltzustand (S1) und einem zweiten Schaltzustand (S2) zu wechseln, wobei im ersten Schaltzustand (S1) der erste Signaleingang (10) mit dem Antennenanschluss (14) und im zweiten Schaltzustand (S2) der zweite Signaleingang (12) mit dem Antennenanschluss (14) elektrisch verbunden ist und wobei in beiden Schaltzuständen (S1, S2) der jeweils andere Signaleingang (12, 10) vom Antennenanschluss (14) elektrisch entkoppelt ist, wobei in dem zweiten Schaltzustand (S2) oder in beiden Schaltzuständen (S1, S2) jeweils durch die Umschalteinrichtung (15) der jeweils vom Antennenanschluss (14) entkoppelte Signaleingang (12, 10) mit einer Abschlusseinrichtung (18) elektrisch verbunden ist und die Abschlusseinrichtung (18) an dem mit ihr verbundenen Signaleingang (12, 10) eine Antenne elektrisch emuliert,
**dadurch gekennzeichnet, dass**
eine Puffereinrichtung (25) bereitgestellt und dazu ausgelegt ist, nach dem Wechseln in den zweiten Schaltzustand (S2) diesen zumindest für eine vorbestimmte Mindestzeitdauer oder permanent zu halten.

2. Schaltvorrichtung (4) nach Anspruch 1, wobei ein Schutzschaltung (24) bereitgestellt ist, welche dazu ausgelegt ist, im zweiten Schaltzustand (S2) oder in beiden Schaltzuständen (S1, S2) eine Sendeleistung des über den vom Antennenanschluss (14) entkoppelten Signaleingang (10) empfangenen Sendesignals (19) zu absorbieren.

3. Schaltvorrichtung nach einem der vorhergehenden Ansprüche, wobei die Umschalteinrichtung (15) dazu ausgelegt ist, für den Fall, dass das zumindest eine Schaltsignal (22) ein vorbestimmtes Störkriterium erfüllt, unabhängig von dem zumindest einen Schaltsignal (22) in den zweiten Schaltzustand (S2) zu schalten.

4. Schaltvorrichtung (4) nach einem der vorhergehenden Ansprüche, wobei die Umschalteinrichtung (15) dazu ausgelegt ist, in Abhängigkeit von einem Auslösesignal eines Crash-Sensors in den zweiten Schaltzustand (S2) zu wechseln.

5. Schaltvorrichtung (4) nach einem der vorhergehenden Ansprüche, wobei die Umschalteinrichtung (15) dazu ausgelegt ist, zumindest ein Schaltsignal über den zweiten Signaleingang (12) zu empfangen.

6. Schalteinrichtung (4) nach Anspruch 5, wobei die Umschalteinrichtung (15) dazu ausgelegt ist, eine vorbestimmte Steuersequenz als Schaltsignal über den zweiten Signaleingang (12) zu empfangen.

7. Schalteinrichtung (4) nach Anspruch 5 oder 6, wobei die Umschalteinrichtung (15) dazu ausgelegt ist, in den zweiten Schaltzustand (S2) zu schalten, falls eine über den zweiten Signaleingang (12) empfangene Signalleistung und/oder eine Amplitude des Sendesignals (23) jeweils größer als ein vorbestimmter Schwellenwert ist.

8. Schaltvorrichtung (4) nach einem der vorhergehenden Ansprüche, wobei die Umschalteinrichtung (15) dazu ausgelegt ist,
- als zumindest ein Schaltsignal (22) eine modulierte Impulsfolge zu erkennen und/oder
- als zumindest ein Schaltsignal (22) ein analoges Signal zu empfangen und in Abhängigkeit von einer Schwellenwertdetektion zwischen den Schaltzuständen umzuschalten und/oder,
- als zumindest ein Schaltsignal (22) ein pulsweitenmoduliertes Signal oder eine Sequenz vorbestimmter Priodizität zu erkennen und/oder
- als zumindest ein Schaltsignal (22) ein digital moduliertes Signal zu erkennen.

9. Schaltvorrichtung (4) nach einem der vorhergehenden Ansprüche, wobei die Umschalteinrichtung (15) zum Einstellen der beiden Schaltzustände (S1, S2) ein HF-Relais oder einen Halbleiterschalter aufweist.

## Claims

1. Switching apparatus (4) for alternately connecting a mobile radio module (2) and an e-call control device (3) to an antenna (5), comprising:
- a first signal input (10) for receiving a transmission signal (19) of the mobile radio module (2);
- a second signal input (12) for receiving a transmission signal (23) of the e-call control device (3);
- an antenna terminal (14) for connecting the antenna (5);
- a switch-over device (15) that is designed to switch over between a first switching state (S1) and a second switching state (S2) as a function of at least a switching signal (22), wherein in the first switching state (S1) the first signal input (10) with the antenna terminal (14) and in the second switching state (S2) the second signal input (12) is electrically connected to the antenna terminal (14) and wherein in both switching states (S1, S2), the respectively other signal input (12, 10) is electrically decoupled from the antenna terminal (14), wherein in the second switching state (S2) or in both switching states (S1, S2), the signal input (12, 10) decoupled by the switch-over device (15) from the antenna terminal (14) is electrically connected with a termination device (18) and the termination device (18) at the signal input (12, 10) connected to it electrically emulates an antenna,
**characterised in that** a buffer device (25) is provided and is designed to hold the second switching state (S2) at least for a predetermined minimum period or permanently.

2. Switching apparatus (4) according to claim 1, wherein a protection circuit (24) is provided, which is designed, in the second switching state (S2) or in both switching states (S1, S2), to absorb transmission power of the transmission signal (19) received via the first signal input (10) decoupled from the antenna terminal (14).

3. Switching apparatus according to one of the preceding claims, wherein the switch-over device (15) is designed, in the event that at least a switching signal (22) fulfils a predetermined interference criterion, to switch into the second switching state (S2), independently of at least a switching signal (22).

4. Switching apparatus (4) according to one of the preceding claims, wherein the switch-over device (15) is adapted, in response to a trigger signal of a crash sensor, to change into the second switching state (S2).

5. Switching apparatus (4) according to one of the preceding claims, wherein the switch-over device (15) is adapted to receive at least one switching signal via the second signal input (12).

6. Switching apparatus (4) according to claim 5, wherein the switch-over device (15) is adapted to receive a predetermined control sequence as switching signal via the second signal input (12).

7. Switching apparatus (4) according to claim 5 or 6, wherein the switch-over device (15) is adapted to switch to the second switching state (S2) if a signal power received via the second signal input (12) and/or an amplitude of the transmission signal (23) is respectively greater than a predetermined threshold.

8. Switching apparatus (4) according to one of the preceding claims, wherein the switch-over device (15) is designed
- to detect a modulated pulse sequence as at least a switching signal (22) and/or
- to receive an analogue signal as at least a switching signal (22) and to switch between the switching states as a function of a threshold value detection and/or
- to detect a pulse width modulated signal or a sequence of predetermined periodicity as at least a switching signal (22) and/or
- to detect a digitally modulated signal as at least a switching signal (22).

9. Switching apparatus (4) according to one of the preceding claims, wherein the switch-over device (15) for adjusting the two switching states (S1, S2) comprises an HF relay or a semiconductor switch.

## Revendications

1. Dispositif de commutation (4) destiné à la liaison alternée d'un module de radiocommunication mobile (2) et d'un appareil de commande d'appel d'urgence (3) avec une antenne (5), comportant :
- une première entrée de signal (10) destinée à la réception d'un signal émis (19) du module de radiocommunication mobile (2) ;
- une deuxième entrée de signal (12) destinée à la réception d'un signal émis (23) de l'appareil de commande d'appel d'urgence (3) ;
- un raccordement d'antenne (14) destiné au raccordement de l'antenne (5) ;
- un dispositif commutateur (15), qui est conçu pour basculer entre un premier état de commutation (S1) et un deuxième état de commutation (S2) en fonction d'au moins un signal de commutation (22),
dans lequel, dans le premier état de commutation (S1), la première entrée de signal (10) est reliée électriquement au raccordement d'antenne (14) et, dans le deuxième état de commutation (S2), la deuxième entrée de signal (12) est reliée électriquement au raccordement d'antenne (14)
et dans lequel, dans les deux états de commutation (S1, S2), l'autre entrée de signal respective (12, 10) est découplée électriquement du raccordement d'antenne (14),
dans lequel, dans le deuxième état de commutation (S2) ou dans les deux états de commutation (S1, S2), l'entrée de signal (12, 10) respectivement découplée du raccordement d'antenne (14) est reliée électriquement à chaque fois par le dispositif commutateur (15) à un dispositif de terminaison (18) et le dispositif de terminaison (18) émule électriquement une antenne au niveau de l'entrée de signal (12, 10) qui lui est reliée,
**caractérisé en ce qu'**un dispositif tampon (25) est mis à disposition et est conçu pour, après le basculement dans le deuxième état de commutation (S2), maintenir celui-ci au moins pendant une durée minimale prédéterminée ou en permanence.

2. Dispositif de commutation (4) selon la revendication 1, dans lequel un circuit protecteur (24) est mis à disposition, lequel dispositif protecteur est conçu pour, dans le deuxième état de commutation (S2) ou dans les deux états de commutation (S1, S2), absorber une puissance émise du signal émis (19) reçu par l'intermédiaire de l'entrée de signal (10) découplée du raccordement d'antenne (14).

3. Dispositif de commutation selon l'une quelconque des revendications précédentes, dans lequel le dispositif commutateur (15) est conçu pour, dans le cas où l'au moins un signal de commutation (22) satisfait à un critère de parasitage prédéterminé, basculer dans le deuxième état de commutation (S2) indépendamment de l'au moins un signal de commutation (22).

4. Dispositif de commutation (4) selon l'une quelconque des revendications précédentes, dans lequel le dispositif commutateur (15) est conçu pour basculer dans le deuxième état de commutation (S2) en fonction d'un signal de déclenchement d'un capteur d'accident.

5. Dispositif de commutation (4) selon l'une quelconque des revendications précédentes, dans lequel le dispositif commutateur (15) est conçu pour recevoir au moins un signal de commutation par l'intermédiaire de la deuxième entrée de signal (12).

6. Dispositif de commutation (4) selon la revendication 5, dans lequel le dispositif commutateur (15) est conçu pour recevoir une séquence de commande prédéterminée comme signal de commutation par l'intermédiaire de la deuxième entrée de commande (12).

7. Dispositif de commutation (4) selon la revendication 5 ou 6, dans lequel le dispositif commutateur (15) est conçu pour commuter dans le deuxième état de commutation (S2) si une puissance de signal reçue par l'intermédiaire de la deuxième entrée de signal (12) et/ou une amplitude du signal émis (23) est à chaque fois supérieure à une valeur de seuil prédéterminée.

8. Dispositif de commutation (4) selon l'une quelconque des revendications précédentes, dans lequel le dispositif commutateur (15) est conçu pour
- détecter en tant qu'au moins un signal de commutation (22) une séquence d'impulsions modulée et/ou
- recevoir en tant qu'au moins un signal de commutation (22) un signal analogique et commuter en fonction d'une détection de valeur de seuil entre les états de commutation et/ou
- détecter en tant qu'au moins un signal de commutation (22) un signal modulé en largeur d'impulsion ou une séquence d'une périodicité prédéterminée et/ou
- détecter en tant qu'au moins un signal de commutation (22) un signal modulé numériquement.

9. Dispositif de commutation (4) selon l'une quelconque des revendications précédentes, dans lequel le dispositif commutateur (15) comporte un relais HF ou un commutateur à semi-conducteur afin de régler les deux états de commutation (S1, S2).
